# EUROPÄISCHE PATENTSCHRIFT

(11) **EP 3 971 110 B1**
(45) Veröffentlichungstag und Bekanntmachung des Hinweises auf die Patenterteilung: **30.10.2024**
(21) Anmeldenummer: 20196786.6
(22) Anmeldetag: 18.09.2020
(51) Int. Cl.: B65G 1/04, B65G 47/90, B65G 47/91, G07F 11/16, B25J 15/02, B25J 15/06

(54) **GREIFER FÜR EINE KOMMISSIONIERVORRICHTUNG**
GRIPPER FOR A PICKING DEVICE
PRÉHENSEUR POUR UN DISPOSITIF DE PRÉPARATION DE COMMANDES

(43) Veröffentlichungstag der Anmeldung: 23.03.2022
(73) Patentinhaber: Becton Dickinson Rowa Germany GmbH, 53539 Kelberg (DE)
(72) Erfinder: GROß, Dietmar, 53539 Kelberg (DE)
(74) Vertreter: Zenz Patentanwälte Partnerschaft mbB

(56) Entgegenhaltungen:
- EP-A1- 3 431 421
- WO-A1-2020/169044
- CN-A- 111 099 235

## Beschreibung

Die vorliegende Erfindung betrifft einen Greifer für eine Kommissioniervorrichtung für Kleinstückgüter, insbesondere Arzneimittelpackungen und Nahrungsergänzungsmittelpackungen.

Bekannte Greifer von Bediensystemen für Kommissioniervorrichtungen umfassen üblicherweise zwei als Klemmbacken ausgebildete Greifbacken, die in Längsrichtung eines Ablagetisches des Greifers (X-Richtung) bewegbar sind, um beispielsweise über die Stirnseite des Ablagetisches hinaus zu einem Lagerplatz einer Arzneimittelpackung bewegt zu werden. Um eine Arzneimittelpackung von dem Ablageort auf den Ablagetisch zu bewegen, wird bei einer Art bekannter Greifer so verfahren, dass die Klemmbacken in einer zweiten Richtung (Y-Richtung) orthogonal zu der ersten Richtung zunächst ein Stück zusammengefahren werden und anschließend zumindest eine der Klemmbacken an der Basis so verschwenkt wird, dass die Spitzen der Klemmbacken sich annähern. Würde man die Klemmbacken nur auf Kontakt mit einem Kleinstückgut zusammenfahren, würde das Kleinstückgut lediglich durch die Haftreibung zwischen Innenfläche der Klemmbacken und Kleinstückgut gehalten. Dies kann selbst bei relativ leichten Kleinstückgütern bzw. Arzneimittelpackungen dazu führen, dass bei der (in der Praxis sehr schnellen) Rückbewegung der Klemmbacken hin zu dem Ablagetisch die Haftreibung nicht ausreicht und das Kleinstückgut nicht ordnungsgemäß auf den Ablagetisch gezogen wird. Bei schweren Kleinstückgütern kann es schlicht unmöglich sein, diese allein mittels der Haftreibung zu bewegen. Aus diesem Grunde wird zumindest eine der Klemmbacken geschwenkt, so dass das Kleinstückgut auch bei nicht ausreichender Haftreibung aufgrund der vorne zusammengefahrenen Klemmbackenspitzen sicher bewegt werden kann.

Zwar können aufgrund des Verschwenkens Kleinstückgüter ausgelagert werden, die mit lediglich Klemmen nicht ausgelagert werden können, es ist aber auch mit dem Verschwenken problematisch, schwere Kleinstückgüter auszulagern, da die durch das Verschwenken erzeugten Kräfte teilweise nicht ausreichen, schwere Kleinstückgüter von einem Ablageort auf einen Greifer zu ziehen.

Als Alternative zu einem Greifer mit Klemmbacken ist es aus der WO 2020/169044, welche die Merkmale des Oberbegriffs des Anspruchs 1 offenbart, bekannt, Greifbacken mit Saugeinrichtungen zu versehen, um Kleinstückgüter zu bewegen. Nachteil eines solchen Greifers ist, es dass bei hohem Vakuum ein hoher Energieaufwand notwendig ist.

Es ist Aufgabe der vorliegenden Erfindung, einen Greifer bereitzustellen, mit welchem Kleinstückgüter mit größerem Gewicht mit geringem Energieaufwand sicher von einem Ablageort auf den Greifer bewegt werden können.

Diese Aufgabe wird gelöst mit einem Greifer für eine Kommissioniervorrichtung mit horizontalen Lagerflächen zur Lagerung von Kleinstückgütern nach Anspruch 1. Der Greifer umfasst einen sich in einer ersten horizontalen Richtung (X-Richtung) und einer zweiten horizontalen Richtung (Y-Richtung), orthogonal zur ersten horizontalen Richtung erstreckenden Ablagetisch, eine Greifbackenführungsanordnung mit zwei sich über dem Ablagetisch in der ersten horizontalen Richtung erstreckenden Greifbacken, wobei zumindest eine der Greifbacken in der zweiten horizontalen Richtung bewegbar ist, sowie eine mit der Greifbackenführungsanordnung gekoppelte Antriebseinheit, mit der die Klemmbackenführungsanordnung in der ersten horizontalen Richtung bewegbar ist. Eine der Greifbacken ist als eine Saugbacke ausgebildet und weist zumindest eine Saugeinrichtung mit einer Saugfläche zum Ansaugen eines Kleinstückguts, wobei eine Saugeinrichtung mit einer Saugleitung mit einem Unterdruck beaufschlagbar ist. Erfindungsgemäß ist benachbart zu einer Saugfläche ein Haftmittel mit einem gegenüber einer Saugbackenoberfläche erhöhten Haftreibungskoeffizienten angeordnet. Die Haftreibung ist dadurch erhöht, das Vakuum kann geringer gehalten werden.

Primär wird das Kleinstückgut aber aufgrund der Druckdifferenz zwischen dem evakuierten Raum der Saugeinrichtung und der Umgebung gehalten - das Kleinstückgut wird quasi durch den Umgebungsdruck angedrückt. Es besteht aufgrund dieses Andrückens nicht mehr die Gefahr, dass ein Kleinstückgut bei zu großer Beschleunigung oder zu großem Gewicht nicht mehr mitgeführt wird, ohne dass die Notwendigkeit besteht, eine der Greifbacken bzw. eine Saugbacke an der Basis zu schwenken. Die Verwendung einer Saugeinrichtung zum sicheren Handhaben eines Kleinstückgutes hat viele Vorteile. Vakuum in der Handhabungstechnik bedeutet: ein sanftes Handling der Kleinstückgüter, geringes Gewicht der Saugeinrichtung selbst und ein geringer Wartungsaufwand aufgrund des Wegfalls mechanischer Bauteile.

Ein weiterer erheblicher Vorteil der Verwendung einer Saugbacke bzw. des Wegfalls der Notwendigkeit des Verschwenkens einer Greif- bzw. Saugbacke ist es, dass bei Verwendung einer Saugbacke auch beispielsweise nur das erste einer Mehrzahl von gleichen, in einer Reihe liegenden Kleinstückgütern sicher von seinem Ablageplatz bewegt werden kann. Wenn zu dem Bewegen eines Kleinstückgutes das Verschwenken notwendig war, ist es bei ungünstiger Ablage mehrerer Kleinstückgüter in einer Reihe mit bekannten Greifern kaum möglich, nur das beispielsweise vordere Kleinstückgut zu bewegen.

Wesentlich für die Erfindung ist, dass eine Saugeinrichtung über eine Saugleitung mit Unterdruck beaufschlagt werden kann. Dies kann geschehen, indem die Saugleitung von "außerhalb" des Greifers zu der Saugeinrichtung geführt wird. Dies kann aber aufgrund der schnellen Bewegungen einer Saugbacke zu erheblichen Belastungen der Saugleitung führen. Auch kann eine "von außen" herangeführte Saugleitung beim Bewegen einer Saugbacke zu einem Ablageort stören (beispielsweise indem benachbarte Kleinstückgüter verschoben werden). Bei einer bevorzugten Ausführungsform des erfindungsgemäßen Greifers ist es daher vorgesehen, dass sich die Saugleitung zumindest abschnittsweise durch die Saugbacke selbst erstreckt bzw. an dieser geführt ist.

Um den Bewegungsweg einer Saugbacke hin zu dem zu bewegenden Kleinstückgut möglichst gering zu halten, ist es bei einer bevorzugten Ausführungsform vorgesehen, dass die Saugeinrichtung einer Saugbacke bei dem distalen Ende der Saugbacke angeordnet ist.

Bei Saugeinrichtungen können nahezu beliebige Saugflächen genutzt werden. In Anpassung an die Form einer Saugbacke ist es bei einer bevorzugten Ausführungsform vorgesehen, dass die Saugfläche einer Saugeinrichtung oval ausgebildet ist.

Die Verwendung einer als Saugbacke ausgebildeten Greifbacke erhöht die Geschwindigkeit, mit der ein Kleinstückgut von einem Ablageort auf den Ablagetisch des Greifers bewegt werden kann. Eine Saugeinrichtung kann aber nur mit Kleinstückgütern mit bestimmten Oberflächeneigenschaften zusammenwirken - so darf die Oberfläche nicht zu stark aufgeraut sein, eine Vielzahl von Nuten aufweisen oder zu stark gekrümmt sein - eine Auslagerung von Kleinstückgütern in Flaschenform kann dann problematisch sein, wenn diese stehend gelagert sind und einen kleinen Radius (und damit eine starke Oberflächenkrümmung) aufweisen.

Bei einer weiteren bevorzugten Ausführungsform ist es vorgesehen, dass zwei Greifbacken als Saugbacken ausgebildet sind, wobei eine der Saugeinrichtungen eine Saugfläche aufweist, die an gekrümmte Oberflächen von Kleinstückgütern angepasst ist.

Aber auch bei der Verwendung von zwei Saugeinrichtungen, von denen eine an gekrümmte Oberflächen angepasst ist, kann es vorkommen, dass das Kleinstückgut so ausgebildet ist (Form, Oberfläche), dass es allein mit Saugwirkung nicht ausgelagert werden kann. Um in der Kommissioniervorrichtung auch solch ungewöhnliche Kleinstückgüter ein- bzw. auslagern zu können, ist es bei einer bevorzugten Ausführungsform des erfindungsgemäßen Greifers daher vorgesehen, dass zumindest eine der Greif- bzw. Saugbacken schwenkbar an der Greifbackenführungsanordnung angeordnet ist. Zwar bedingt eine entsprechende Ausgestaltung des Greifers einen gewissen baulichen Mehraufwand, die Flexibilität des Greifers ist aber wesentlich erhöht. "Normale" Kleinstückgüter (insbesondere Arzneimittel- oder Nahrungsergänzungsmittelpackungen) können schneller (ohne Verschwenken) von einem Ablageort bewegt werden, ungewöhnliche Kleinstückgüter können aber ebenso gehandelt werden.

Bei einer bevorzugten Ausführungsform ist es vorgesehen, dass das Haftmittel durch eine Mehrzahl von elastischen Erhöhungen realisiert ist. Dies ist besonders sinnvoll, da das Saugmittel einen Saugnapf aufweist, der die Ebene der Saugbackenoberfläche überragt (wenn kein Kleinstückgut angesaugt ist) .

Im Nachfolgenden wird eine bevorzugte Ausführungsform des erfindungsgemäßen Greifers unter Bezugnahme auf die Zeichnung beschrieben, in welcher
Figuren 1a und 1b Schrägansichten einer bevorzugten Ausführungsform des erfindungsgemäßen Greifers zeigen;
Figur 2 eine Detail-Schrägansicht der bevorzugten Ausführungsform im Bereich der Greifbackenführungsanordnung zeigt;
Figur 3 eine Detail-Draufsicht der bevorzugten Ausführungsform im Bereich der Greifbackenführungsanordnung zeigt;
Figur 4 eine Detail-Schrägansicht der Greiferspitze zeigt;
Figur 5 eine Detail-Draufsicht der Greiferspitze zeigt; und
Figur 6 eine Detailansicht einer Saugeinrichtung an einer Saugbacke zeigt.

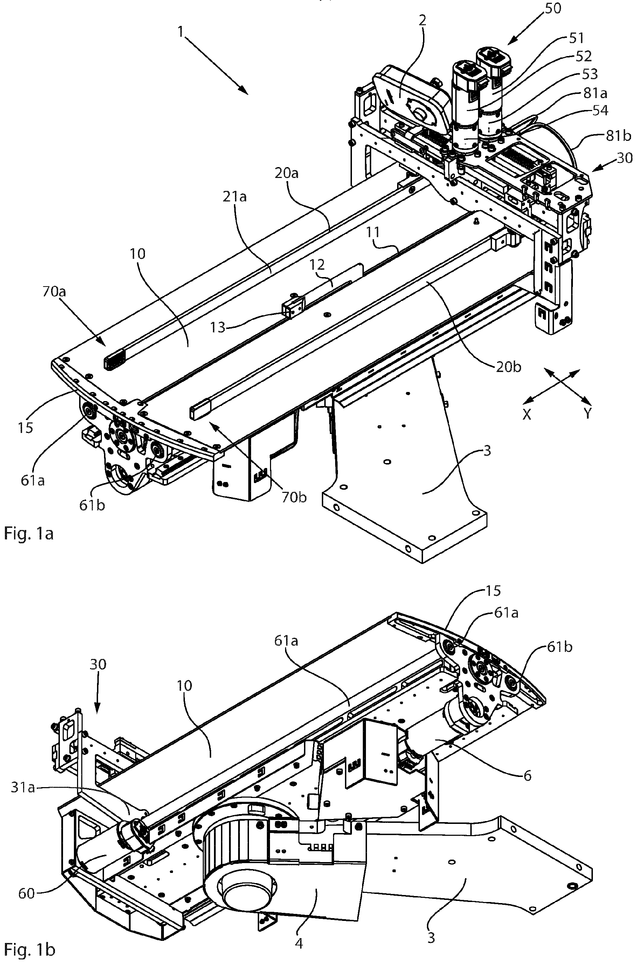

Figuren 1a und 1b zeigen zwei Schrägansichten einer bevorzugten Ausführungsform des erfindungsgemäßen Greifers 1, wobei Figur 1a eine Schrägansicht von oben und Figur 1b eine Schrägansicht von unten zeigt. Der erfindungsgemäße Greifer 1 ist Teil eines ansonsten nicht dargestellten Bediengerätes für eine Kommissioniervorrichtung und umfasst einen Ablagetisch 10 mit einer langgestreckten zentralen Öffnung 11, die sich in einer ersten horizontalen Richtung (X-Richtung) des Ablagetisches 10 erstreckt. In der Öffnung 11 ist ein Schiebeelement 12 mit einem verbreiterten Schiebekopf 13 angeordnet. Das Schiebeelement 12 ist mittels des in Figur 1b dargestellten Antriebes 6 in der langgestreckten Öffnung 11 bewegbar, um ein auf dem Ablagetisch 10 aufliegendes Kleinstückgut über eine Ein- und Auslagerungsstirnseite 15 des Greifers zu einem Ablageort zu bewegen.

Der Greifer 1 umfasst eine gegenüber der Ein- und Auslagerungsstirnseite 15 dargestellte Greifbackenführungsanordnung 30, welche mit einer Antriebseinheit 60, 61a, 61b gekoppelt ist, mit der die Greifbackenführungsordnung 30 in der X-Richtung bewegt werden kann. Die Antriebseinheit umfasst einen Motor 60, der zwei Linearachsen 61a, 61b antreibt, wobei eine Drehbewegung der Linearachsen (nicht dargestellte) Schlitten in X-Richtung bewegt. Die Schlitten sind mit den Ablagetisch 10 untergreifenden Abschnitten 31a, 31b (siehe nachfolgende Figuren) verbunden, so dass eine Drehbewegung der Linearachsen eine Bewegung in X-Richtung der Greifbackenführungsanordnung 30 bewirkt.

Die Greifbackenführungsanordnung 30 umfasst zwei Greifbacken, die bei der dargestellten Ausführungsform des erfindungsgemäßen Greifers beide als Saugbacken 20a, 20b mit gegenüberliegenden Saugbackenoberflächen 21a, 21b ausgebildet sind. Bei der gezeigten Ausführungsform des erfindungsgemäßen Greifers umfasst die Greifbackenführungsanordnung 30 eine Antriebseinheit 50 mit zwei Antrieben 51, 52 sowie diesen zugeordneten Getrieben 53, 54. Wie dies unter Bezugnahme auf nachfolgende Figuren detaillierter beschrieben ist, können mit der Antriebseinheit 50 die Saugbacken 20a, 20b in Y-Richtung verfahren werden. Ferner dient die Antriebseinheit 50 dazu, die beiden Saugbacken bei ihrer Basis an der Greifbackenführungsanordnung zu verschwenken. Auf der Greifbackenführungsanordnung 30 ist ferner eine Sensoreinheit 2 angeordnet. In Figur 1b ist zu erkennen, dass an einem Drehgelenk unterhalb des eigentlichen Greifers eine Steuereinrichtung 4 angeordnet ist, die mit den verschiedenen Komponenten des Greifers (Sensoreinheit 2, Greifbackenführungsanordnung 30) gekoppelt sein kann. Bei alternativen Ausführungsformen kann die Steuereinheit auch weiter entfernt von dem eigentlichen Greifer angeordnet sein. Das Drehgelenk ist über einen Arm 3 mit einer (nicht dargestellten) Bewegungsmechanik gekoppelt, mit welcher der Greifer in der Kommissioniervorrichtung bewegt wird.

Bei der in den Figuren dargestellten bevorzugten Ausführungsform sind zwei Greifbacken des Greifers als Saugbacken 20a, 20b ausgebildet. Bei ihren distalen Enden umfassen beide Saugbacken eine Saugeinrichtung 70a, 70b, die jeweils mit einer Saugleitung 81a, 81b (siehe Figur 1a) gekoppelt sind. Bei der gezeigten Ausführungsform verlaufen die beiden Saugleitungen 81a, 81b zumindest abschnittsweise durch die Saugbacken und enden bei den Saugeinrichtungen. Wie dies in Figur 1a zu erkennen ist, sind die beiden Saugleitungen 81a, 81b aus den Saugbacken bei dem rückwärtigen Abschnitt der Greifbackenführungsanordnung 30 zusammengeführt. Über die Saugleitungen 81a, 81b können die Saugeinrichtungen 70a, 70b gegebenenfalls getrennt voneinander mit einem Unterdruck beaufschlagt werden. Wie die Saugleitungen 81a, 81b im Detail weitergeführt werden, ist für die vorliegende Erfindung nicht wesentlich und ist daher nicht weiter ausgeführt. Wesentlich ist lediglich, dass mittels der Saugleitungen ein Unterdruck bei den Saugeinrichtungen angelegt werden kann. Alternativ wäre es auch denkbar, dass die Saugleitungen außerhalb der Saugbacken geführt sind, beispielsweise an den Außenflächen der Saugbacken.

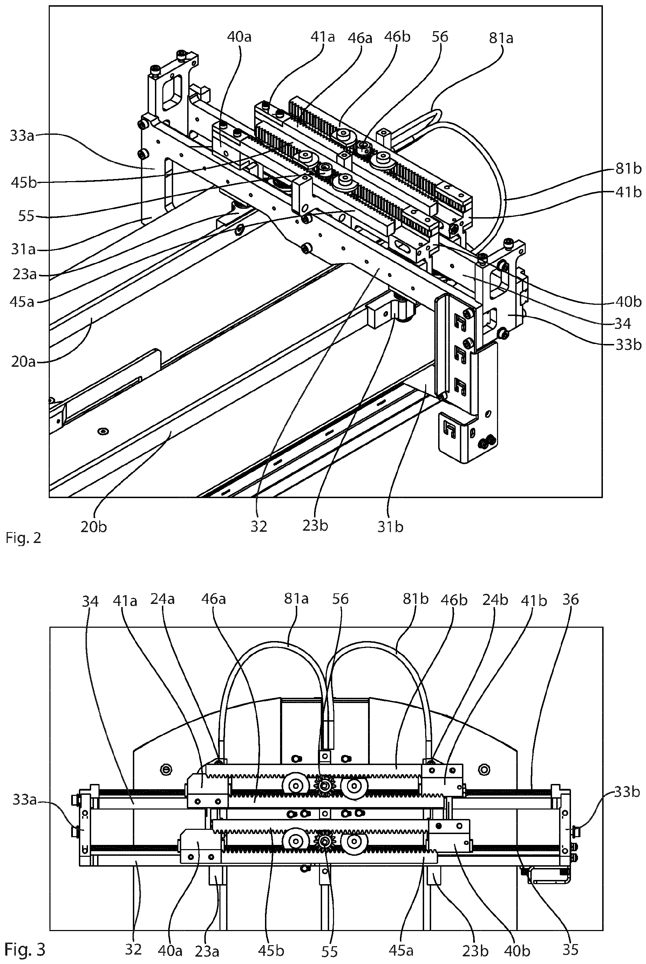

Die Figuren 2 und 3 zeigen Detailansichten der Greifbackenführungsanordnung 30, wobei Figur 2 eine Schrägansicht und Figur 3 eine Draufsicht zeigt. Bei den Ansichten gemäß den Figuren 2 und 3 sind die Antriebseinheit 50, die Sensoreinheit 2 und Teile des Gehäuses der Greifbackenführungsanordnung 30 fortgelassen, um die inneren Bauteile, die zum Verfahren und Verschwenken der Saugbacken verwendet werden, darzustellen.

Wie bereits oben dargelegt, ist die in der Zeichnung dargestellte Ausführungsform des erfindungsgemäßen Greifers so ausgelegt, dass beide Saugbacken in Y-Richtung verfahrbar und an der Basis der Greifbackenführungsanordnung 30 schwenkbar sind. Die in der Zeichnung dargestellte Ausführungsform des erfindungsgemäßen Greifers bietet also eine erhebliche Flexibilität im Hinblick auf das Handling von Kleinstückgütern. Kleinstückgüter mit "üblicher" rechteckiger Form können ohne ein Verschwenken der Saugbacken unter Verwendung von einer oder zwei Saugeinrichtungen 70a, 70b von einem Ablageort auf den Ablagetisch 10 bewegt werden. Sofern ein Kleinstückgut "unüblich" ausgebildet ist, beispielsweise mit einer sehr unebenen Oberfläche, die ein Halten und Bewegen mittels der Saugeinrichtungen verhindert, können die Saugbacken auch verschwenkt werden, wie dies bei bekannten Greifern möglich ist, um diese "unüblichen" Arzneimittelpackungen auf den Ablagetisch zu bewegen.

Die Greifbackenführungsanordnung 30 umfasst zwei seitliche Rahmenstrukturbauteile 33a, 33b, zwischen denen sich in Y-Richtung parallel zueinander (und in X-Richtung voneinander beabstandet) zwei Querbauteile 32, 34 erstrecken, wobei an dem Querbauteil 32 eine erste Führung 35 und an dem Querbauteil 34 eine zweite Führung 36 angeordnet ist, wie dies in Figur 3 zu erkennen ist. An jeder der Führungen 35, 36 sind zwei Schlitten 40a, 40b; 41a, 41b angeordnet - zwei erste Schlitten 40a, 40b an der ersten Führung 35 und zwei zweite Schlitten 41a, 41b an der zweiten Führung 36. Bei der dargestellten Ausführungsform des erfindungsgemäßen Greifers umgreifen Abschnitte der Schlitten Vorsprünge der Führungen 35, 36, so dass die Schlitten auf diesen Vorsprüngen aufliegen und in Y-Richtung an den Führungen bewegbar sind.

Die Schlitten 40a, 40b; 41a, 41b sind mit Antriebselementen 45a, 46a; 45b, 46b verbunden, die bei der gezeigten Ausführungsform als Zahnstangen ausgebildet sind. Die der ersten Führung 35 bzw. den entsprechenden ersten Schlitten 40a, 40b zugeordneten Antriebselemente 45a, 45b sowie die entsprechenden, der zweiten Führung 36 zugeordneten Antriebselemente 46a, 46b sind bezogen auf die Zahnelemente der Zahnstangen derart ausgerichtet, dass sich die Zahnelemente gegenüberliegen und bei ihren freien Enden einen Überlappungsbereich bilden. Mittig in dem Überlappungsbereich der Antriebselemente bzw. Zahnstangen ist jeweils ein Antriebszahnrad 55, 56 angeordnet, welches über ein (in den Figuren 2 und 3 nicht dargestelltes) Getriebe 53, 54 mit den Antrieben 51, 52 gekoppelt ist. Der Abstand zwischen den Schlitten 40a, 40b; 41a, 41b einer Führung und dem entsprechenden Antriebszahnrad ist identisch, woraus folgt, dass ein Antriebszahnrad genau mittig zwischen zwei Schlitten angeordnet ist, so dass eine Bewegung des Antriebszahnrades synchrone Bewegungen der Schlitten bewirkt. Bei einer Drehung des Antriebszahnrades werden die entsprechenden Schlitten also synchron aufeinander zu oder voneinander wegbewegt, wobei dies für die beiden den Führungen 35 und 36 zugeordneten Schlittengruppen gilt.

Die Schlitten der ersten Führung können getrennt oder simultan zu den bzw. mit den Schlitten der zweiten Führung bewegt werden, so dass eine große Flexibilität hinsichtlich der Bewegung der Schlitten besteht. Da die Schlitten der ersten Führung und der zweiten Führung in X-Richtung voneinander beabstandet sind, ergibt sich daraus, dass durch die Steuerung der Bewegung der Schlitten die mit den Schlitten gekoppelten Saugbacken in Y-Richtung bewegt werden können und verschwenkt werden können. Eine Bewegung in Y-Richtung erfolgt, wenn die einer Saugbacke zugeordneten Schlitten der ersten und zweiten Führung synchron bewegt werden. Wird beispielsweise lediglich einer der beiden jeder Saugbacke zugeordneten Schlitten bewegt, bedingt dies ein Verschwenken der entsprechenden Saugbacke.

Wie bereits ausgeführt, sind die Saugbacken 20a, 20b mit den oben beschriebenen Schlitten gekoppelt. Diese Kopplung ist in Figur 3 angedeutet. Bei der gezeigten Ausführungsform sind die Saugbacken 20a, 20b jeweils über ein Gelenk 23a, 24a; 23b, 24b mit den Schlitten 40a, 41a; 40b, 41b verbunden. Da ein Verschwenken der Saugbacken eine Distanzänderung zwischen den einer Saugbacke zugeordneten Schlitten bedingt, ist bei einem einer Saugbacke zugeordneten Gelenk beispielsweise eine Langlochführung vorgesehen. Für weitere Details hinsichtlich des Aufbaus der Greifbackenführungsanordnung 30 der gezeigten Ausführungsform wird auf die europäische Patentanmeldung EP 20 153 879.0 verwiesen, wobei deren Offenbarungsgehalt hiermit explizit aufgenommen ist.

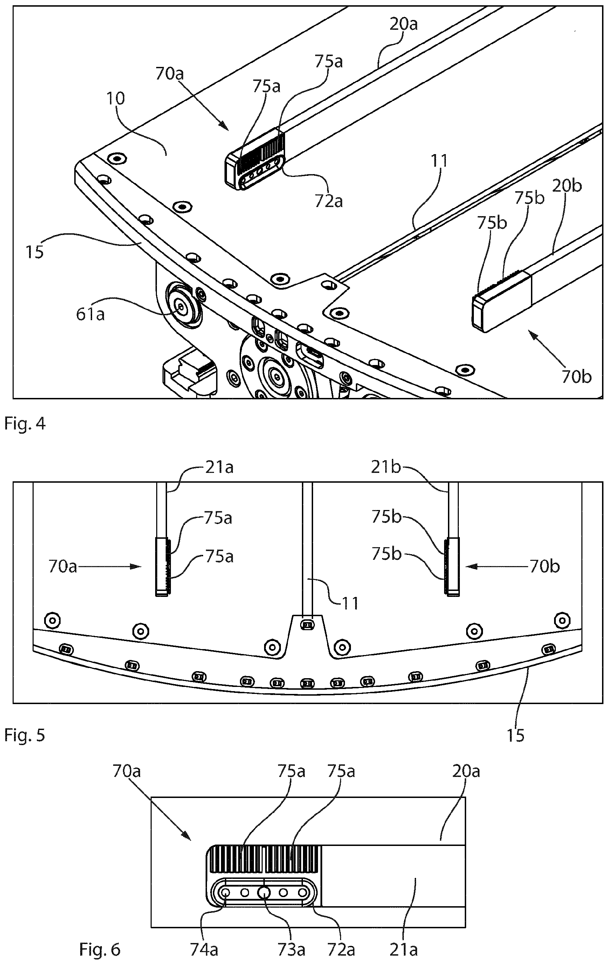

Die Figuren 4 und 5 zeigen Detailansichten der Lade- und Entladestirnseite des Greifers, wobei insbesondere die Saugeinrichtungen 70a, 70b dargestellt sind. Wie dies in den Figuren 4 und 5 zu erkennen ist, weisen die Saugbacken 20a, 20b bei der gezeigten Ausführungsform jeweils eine Saugeinrichtung 70a, 70b bei dem distalen Ende der Saugbacke auf. Bei der gezeigten Ausführungsform umfasst die Saugeinrichtung eine Saugfläche 72a in Form eines Langloches, die Form der Saugfläche ist also im Wesentlichen an die Form der Saugbacken angepasst. Oberhalb der Saugflächen der Saugeinrichtungen sind bei der gezeigten Ausführungsform jeweils zwei Haftmittel 75a, 75b angeordnet, die einen gegenüber den Saugbackenoberflächen 21a, 21b erhöhten Haftreibungskoeffizienten aufweisen. Wie dies insbesondere in Figur 5 zu erkennen ist, sind die Haftmittel bei der gezeigten Ausführungsform durch eine Mehrzahl von elastischen Erhöhungen realisiert, die über die Ebene der Saugbackenoberfläche hinausragen. Wird ein Kleinstückgut mit den Saugeinrichtungen 70a, 70b angesaugt, werden die Erhöhungen komprimiert, und die Haftreibung zwischen dem Kleinstückgut und der Saugbacke ist gegenüber einer Haftreibung ohne die Haftmittel erhöht. Dadurch ergibt sich die Möglichkeit, den an die Saugeinrichtungen angelegten Unterdruck gegenüber einer Ausführungsform ohne Haftmittel zu vermindern, was eine Energieeinsparung bedeutet.

In Figur 6 ist die Detailansicht einer Saugeinrichtung 70a gezeigt, bei welcher ebenfalls über der Saugfläche 72a zwei Haftmittel 75a angeordnet sind. Wie dies in Figur 6 zu erkennen ist, umfasst die Saugeinrichtung 70a bei der gezeigten Ausführungsform eine zentrale Saugöffnungen 73a, welche zu beiden Seiten von jeweils zwei Erhebungen 74a umgeben ist, welche ein komplettes Anliegen bzw. Eindrücken der die Saugfläche 72a definierenden Sauglippe verhindern sollen. Bei alternativen Ausführungsformen kann die Gestalt der Saugfläche variieren, ebenso die Anzahl der Saugöffnungen und Erhebungen.

## Patentansprüche

1. Greifer (1) für eine Kommissioniervorrichtung mit horizontalen Lagerflächen zur Lagerung von Kleinstückgütern, aufweisend:
einen sich in einer ersten horizontalen Richtung (X-Richtung) und einer zweiten horizontalen Richtung (Y-Richtung), orthogonal zur ersten horizontalen Richtung erstreckenden Ablagetisch (10),
eine Greifbackenführungsanordnung (30) mit zwei sich über dem Ablagetisch (10) in der ersten horizontalen Richtung erstreckenden Greifbacken, wobei zumindest eine der Greifbacken in der zweiten horizontalen Richtung bewegbar ist, und
eine mit der Greifbackenführungsanordnung (30) gekoppelte Antriebseinheit (60, 61a, 61b), mit der die Greifbackenführungsanordnung (30) in der ersten horizontalen Richtung bewegbar ist,
wobei zumindest eine der Greifbacken als Saugbacke (20a, 20b) ausgebildet ist und eine Saugeinrichtung (70a, 70b) mit einer Saugfläche (72a, 72b) zum Ansaugen eines Kleinstückguts aufweist, wobei die Saugeinrichtung (70a, 70b) mit einer Saugleitung (81a, 81b) mit einem Unterdruck beaufschlagbar ist,
**dadurch gekennzeichnet, dass** benachbart einer Saugfläche (72a, 72b) ein Haftmittel (75a, 75b) mit einem gegenüber einer Saugbackenoberfläche (21a, 21b) erhöhten Haftreibungskoeffizienten angeordnet ist.

2. Greifer (1) für eine Kommissioniervorrichtung mit horizontalen Lagerflächen zur Lagerung von Kleinstückgütern nach Anspruch 1, **dadurch gekennzeichnet, dass** sich die Saugleitung (81a, 81b) zumindest abschnittsweise durch die Saugbacke (20a, 20b) selbst erstreckt oder an dieser geführt ist.

3. Greifer (1) für eine Kommissioniervorrichtung mit horizontalen Lagerflächen zur Lagerung von Kleinstückgütern nach Anspruch 1 oder 2, **dadurch gekennzeichnet, dass** die Saugeinrichtung (70a, 70b) einer Saugbacke (20a, 20b) bei dem distalen Ende der Saugbacke angeordnet ist.

4. Greifer (1) für eine Kommissioniervorrichtung mit horizontalen Lagerflächen zur Lagerung von Kleinstückgütern nach einem der Ansprüche 1 - 3, **dadurch gekennzeichnet, dass** die Saugfläche (72a, 72b) einer Saugeinrichtung (70a, 70b) oval ausgebildet ist.

5. Greifer (1) für eine Kommissioniervorrichtung mit horizontalen Lagerflächen zur Lagerung von Kleinstückgütern nach einem der Ansprüche 1 - 4, **dadurch gekennzeichnet, dass** zwei Greifbacken als Saugbacken (20a, 20b) ausgebildet sind, wobei eine der Saugeinrichtungen eine Saugfläche aufweist, die an gekrümmte Oberflächen von Kleinstückgütern angepasst ist.

6. Greifer (1) für eine Kommissioniervorrichtung mit horizontalen Lagerflächen zur Lagerung von Kleinstückgütern nach einem der Ansprüche 1 - 5, **dadurch gekennzeichnet, dass** zumindest eine der Greif- bzw. Saugbacken (20a, 20b) schwenkbar an der Greifbackenführungsanordnung (30) angeordnet ist.

7. Greifer (1) für eine Kommissioniervorrichtung mit horizontalen Lagerflächen zur Lagerung von Kleinstückgütern nach einem der Ansprüche 1 - 6, **dadurch gekennzeichnet, dass** das Haftmittel (75a, 75b) durch eine Mehrzahl von elastischen Erhöhungen realisiert ist.

## Claims

1. Gripper (1) for a picking device having horizontal storage surfaces for storing small piece goods, comprising:
a delivery table (10) extending in a first horizontal direction (X direction) and a second horizontal direction (Y direction) which is orthogonal to the first horizontal direction,
a gripping jaw guide arrangement (30) having two gripping jaws extending in the first horizontal direction over the delivery table (10), wherein at least one of the gripping jaws is movable in the second horizontal direction, and
a drive unit (60, 61a, 61b) which is coupled to the gripping jaw guide arrangement (30) and by means of which the gripping jaw guide arrangement (30) is movable in the first horizontal direction,
wherein at least one of the gripping jaws is designed as a suction jaw (20a, 20b) and has a suction device (70a, 70b) having a suction surface (72a, 72b) for suctioning a small piece good, wherein a vacuum can be applied on the suction device (70a, 70b) using a suction line (81a, 81b),
**characterized in that** an adhesive means (75a, 75b) having an increased adhesive friction coefficient compared to the suction jaw surface (21a, 21b) is arranged adjacent to a suction surface (72a, 72b).

2. Gripper (1) for a picking device having horizontal storage surfaces for storing small piece goods according to claim 1, **characterized in that** the suction line (81a, 81b) extends at least in portions through the suction jaw (20a, 20b) itself or is guided thereon.

3. Gripper (1) for a picking device having horizontal storage surfaces for storing small piece goods according to claim 1 or 2, **characterized in that** the suction device (70a, 70b) of a suction jaw (20a, 20b) is arranged at the distal end of the suction jaw.

4. Gripper (1) for a picking device having horizontal storage surfaces for storing small piece goods according to any of claims 1 to 3, **characterized in that** the suction surface (72a, 72b) of a suction device (70a, 70b) is designed to be oval-shaped.

5. Gripper (1) for a picking device having horizontal storage surfaces for storing small piece goods according to any of claims 1 to 4, **characterized in that** two gripping jaws are designed as suction jaws (20a, 20b), wherein one of the suction devices has a suction surface which is adapted to curved surfaces of small piece goods.

6. Gripper (1) for a picking device having horizontal storage surfaces for storing small piece goods according to any of claims 1 to 5, **characterized in that** at least one of the gripping or suction jaws (20a, 20b) is arranged pivotably on the gripping jaw guide arrangement (30).

7. Gripper (1) for a picking device having horizontal storage surfaces for storing small piece goods according to any of claims 1 - 6, **characterized in that** the adhesive means (75a, 75b) is implemented by a plurality of elastic elevations.

## Revendications

1. Préhenseur (1) pour un dispositif de préparation de commandes avec des surfaces de stockage horizontales pour le stockage de petits articles, présentant :
une table de dépôt (10) s'étendant dans une première direction horizontale (direction X) et dans une deuxième direction horizontale (direction Y), orthogonale à la première direction horizontale,
un ensemble de guidage de mâchoires de préhension (30) comprenant deux mâchoires de préhension s'étendant au-dessus de la table de dépôt (10) dans la première direction horizontale, au moins une des mâchoires de préhension étant mobile dans la deuxième direction horizontale, et
une unité d'entraînement (60, 61a, 61b) couplée à l'ensemble de guidage de mâchoires de préhension (30), avec laquelle l'ensemble de guidage de mâchoires de préhension (30) peut être déplacé dans la première direction horizontale,
au moins l'une des mâchoires de préhension étant conçue comme mâchoire d'aspiration (20a, 20b) et présentant un dispositif d'aspiration (70a, 70b) avec une surface d'aspiration (72a, 72b) pour aspirer un petit article, le dispositif d'aspiration (70a, 70b) pouvant être alimenté en dépression par une conduite d'aspiration (81a, 81b),
**caractérisé en ce que**, au voisinage d'une surface d'aspiration (72a, 72b), est disposé un moyen d'adhérence (75a, 75b) ayant un coefficient de friction d'adhérence plus élevé par rapport à une surface de mâchoire d'aspiration (21a, 21b).

2. Préhenseur (1) pour un dispositif de préparation de commandes avec des surfaces de stockage horizontales pour le stockage de petits articles selon la revendication 1, **caractérisé en ce que** la conduite d'aspiration (81a, 81b) s'étend au moins par sections à travers la mâchoire d'aspiration (20a, 20b) elle-même ou est guidée sur celle-ci.

3. Préhenseur (1) pour un dispositif de préparation de commandes avec des surfaces de stockage horizontales pour le stockage de petits articles selon la revendication 1 ou 2, **caractérisé en ce que** le dispositif d'aspiration (70a, 70b) d'une mâchoire d'aspiration (20a, 20b) est disposé à l'extrémité distale de la mâchoire d'aspiration.

4. Préhenseur (1) pour un dispositif de préparation de commandes avec des surfaces de stockage horizontales pour le stockage de petits articles selon l'une des revendications 1 à 3, **caractérisée en ce que** la surface d'aspiration (72a, 72b) d'un dispositif d'aspiration (70a, 70b) est ovale.

5. Préhenseur (1) pour un dispositif de préparation de commandes avec des surfaces de stockage horizontales pour le stockage de petits articles selon l'une des revendications 1 à 4, **caractérisée en ce que** deux mâchoires de préhension sont conçues comme des mâchoires d'aspiration (20a, 20b), l'un des dispositifs d'aspiration présentant une surface d'aspiration qui est adaptée aux surfaces courbes des petits articles.

6. Préhenseur (1) pour un dispositif de préparation de commandes avec des surfaces de stockage horizontales pour le stockage de petits articles selon l'une des revendications 1 à 5, **caractérisée en ce qu'**au moins l'une des mâchoires de préhension ou d'aspiration (20a, 20b) est disposée de manière pivotante sur l'ensemble de guidage de mâchoires de préhension (30) .

7. Préhenseur (1) pour un dispositif de préparation de commandes avec des surfaces de stockage horizontales pour le stockage de petits articles selon l'une des revendications 1 - 6, **caractérisé en ce que** le moyen d'adhérence (75a, 75b) est réalisé par une pluralité de reliefs élastiques.
